# EUROPEAN PATENT APPLICATION

(11) **EP 2 327 621 A2**
(43) Date of publication of application: **01.06.2011**
(21) Application number: 10157612.2
(22) Date of filing: 24.03.2010
(51) Int. Cl.: B63B 39/02, B63B 25/28, F03D 1/00

(54) **A wind turbine installation vessel and an adjustment device of its center of gravity**

(30) Priority: 27.11.2009 CN 200910237982
(71) Applicant: Sany Electric Co., Ltd., Huilongguan Changping District Beijing 102206 (CN)
(72) Inventor: Wu, Jialiang, 102206, Beijing (CN); Wang, Xinming, 102206, Beijing (CN); Li, Yanlin, 102206, Beijing (CN); Bai, Junlei, 102206, Beijing (CN)
(74) Representative: Kling, Simone

(57) **Abstract**

The present invention discloses a gravity center adjustment device (2) for a wind turbine installation vessel. The gravity center adjustment device (2) is movably mounted to an outside of a vessel body (4) of the wind turbine installation vessel, so that the gravity center adjustment device (2) can selectively move in a plane substantially parallel with the vessel body (4). Since the gravity center adjustment device (2) according to the invention is movably installed to the vessel body and can move in a plane substantially parallel with the vessel body (4) so as to adjust the horizontal position of the gravity center of the installation vessel, its ability of adjusting the gravity center of the wind turbine installation vessel can be improved and the stability of the wind turbine installation vessel can be improved. Therefore, the operation efficiency can be improved and the cost of constructing a wind power plant on the offshore can be reduced. The present invention also discloses a wind turbine installation vessel including the gravity center adjustment devices (2) described above.

## Description

### FIELD OF THE INVENTION

The present invention relates to an engineering machinery field, in particular, to a gravity center adjustment device for a wind turbine installation vessel. The present invention also relates to a wind turbine installation vessel including the gravity center adjustment device.

### BACKGROUND

With rapid development of economic construction, electric energy has had more and more influence on economic construction and people's life. As one of various electric power generation ways, wind power generation has drawn people's more and more attention.

The so-called wind power generation is an electric power generation way in which kinetic energy of wind is converted into mechanical energy which is then converted into electric energy. Because offshore wind resource is very rich, more and more wind power plants are being built on the offshore. During the wind power plants are constructed on the offshore, the installation of wind turbine (i.e., wind power generation unit) is an important procedure, which is typically implemented by means of a wind turbine installation vessel. The installation of wind turbine means that the wind turbine is installed onto a wind turbine installation base which is pre-set on the offshore.

In the prior art, there are mainly two kinds of wind turbine installation ways, i.e., integral type installation and split type installation.

The integral type installation is an installation way in which the wind turbine is assembled at the dock or the like and then transported to the wind power plant so that the whole wind turbine is installed in position at a time, which is generally carried out by means of an integral installation vessel (floating crane vessel). The integral installation vessel includes a vessel body and a hoisting device provided on the vessel body. The hoisting device includes a hanging hook that is connected by steel wire ropes, whereby the hoisting of the wind turbine is achieved by the hanging hook.

During the operation, after the integral installation vessel arrives at a pre-determined location, the integral installation vessel is roughly positioned through dropping an anchor. Then, the assembled wind turbine, which is transported from the dock by a transporting vessel, is hoisted and installed onto the wind turbine installation base.

The split type installation is an installation way in which the tower, nacelle and rotor of the wind turbine are installed on the wind turbine installation base in turn, which is generally carried out by means of a split installation vessel. The split installation vessel is substantially same as the integral installation vessel in structure, except that legs for fixing to the vessel body are added.

During the operation, after the split installation vessel arrives at a pre-determined location, the split installation vessel is roughly positioned through dropping an anchor and is then supported by the legs and hoisted by a hoisting device.

During the installation of wind turbine by the integral installation vessel, the gravity center of the wind turbine installation vessel displaces as a result of the displacement of the wind turbine. Meanwhile, in order to keep the installation vessel stable, in the prior art, it is generally that water is injected into a ballast bank formed in the installation vessel, thereby realizing the purpose of varying the gravity center of the wind turbine installation vessel.

However, since it takes some time to inject water into the ballast bank of the wind turbine installation vessel, it is generally required to lower the moving speed of the wind turbine, especially the moving speed of the wind turbine in a direction in parallel with the vessel body of the wind turbine installation vessel, so as to maintain the stability of the wind turbine installation vessel. Hence, the operation efficiency of installing the wind turbine is affected and the construction cost is raised.

Therefore, how to improve the speed of adjusting the gravity center of the installation vessel in the vertical and horizontal directions to thereby improve the operation efficiency of installing the wind turbine is becoming a technical problem that needs to be addressed by those skilled in the art

### SUMMARY OF THE INVENTION

An object of the present invention is to provide a gravity center adjustment device, which is able to improve the speed of adjusting the gravity center of the installation vessel in the vertical and horizontal directions to thereby improve the operation efficiency of installing the wind turbine. Another object of the present invention is to provide a wind turbine installation vessel including the gravity center adjustment device.

To address the above technical problem, the present invention provides a gravity center adjustment device for a wind turbine installation vessel. The gravity center adjustment device is movably mounted to an outside of a vessel body of the wind turbine installation vessel, so that the gravity center adjustment device can selectively move in a plane substantially parallel with the vessel body.

Preferably, the gravity center adjustment device further includes a mounting rack, a counterweight and a height adjuster for adjusting a relative height between the counterweight and the vessel body, with the mounting rack mounted to the vessel body. One of the mounting rack and the vessel body is provided with sliding blocks, and the other is provided with a sliding channel that cooperates with the sliding blocks. The counterweight is mounted to the mounting rack by the height adjuster.

Preferably, the mounting rack includes a horizontal installation plate on which the sliding blocks are arranged. The counterweight is mounted to the horizontal installation plate by the height adjuster.

Preferably, the horizontal installation plate includes an upper horizontal installation plate and a lower horizontal installation plate that are arranged substantially in parallel with each other and connected with each other by an upright plate which is substantially perpendicular thereto. The lower surface of the upper horizontal installation plate and the upper surface of the lower horizontal installation plate are provided with sliding blocks, respectively.

Preferably, the height adjuster is a screw stem, and at least one of the mounting rack and the counterweight is provided with a screw hole that corresponds to the screw stem.

Preferably, the height adjuster is an oil cylinder, a piston barrel of the oil cylinder is fixed to the mounting rack, and an end of a piston rod of the oil cylinder is fixedly connected with the counterweight.

Preferably, a plurality of the gravity center adjustment devices are evenly arranged on left and right sides of the vessel body.

Preferably, the gravity center adjustment device is mounted below the vessel body.

Preferably, the sliding channel extends in the back and forth direction of the vessel body.

The invention also provides a wind turbine installation vessel, which includes any one of the gravity center adjustment devices described above.

The gravity center adjustment device according to the present invention is used for a wind turbine installation vessel and movably mounted to the outside of the vessel body of the wind turbine installation vessel, so that the gravity center adjustment device selectively moves in a plane substantially parallel with the vessel body. When the wind turbine installation vessel is subjected to the influence of weather conditions and operation states and it is required to adjust the gravity center of the wind turbine installation vessel, the adjustment can be made by the gravity center adjustment device movably mounted to the outside of the vessel body of the wind turbine installation vessel. As such, on one hand, since the existence of the gravity center adjustment device according to the present invention is independent of the vessel body, its size is no longer limited by the size of the wind turbine installation vessel and the size of the ballast bank provided in the vessel body of the wind turbine installation vessel and may be set as desired so that the adjustment ability of the gravity center adjustment device can be changed; on the other hand, since the gravity center adjustment device is movably installed to the vessel body and can move in a plane substantially parallel with the vessel body so as to adjust the horizontal position of the gravity center of the installation vessel, the gravity center adjustment device is fixed when reaching a predetermined position to thereby ensure the stability of the installation vessel, whereby its ability of adjusting the gravity center of the wind turbine installation vessel can be improved and the stability of the wind turbine installation vessel can be improved. Therefore, the wind turbine installation vessel can operate in an environment of poor weather condition, so that the operation efficiency can be improved and the cost of constructing a wind power plant on the offshore can be reduced.

In a preferred embodiment, the gravity center adjustment device according to the present invention includes a mounting rack, a counterweight and a height adjuster for adjusting a relative height between the counterweight and the vessel body, with the mounting rack mounted to the vessel body by a connecting member. One of the mounting rack and the vessel body is provided with sliding blocks, and the other is provided with a sliding channel that cooperates with the sliding blocks. The counterweight is mounted to the mounting rack by the height adjuster. When the height adjustment of the gravity center of the wind turbine installation vessel is performed, a relative height between the counterweight and the vessel body is adjusted by the height adjuster, thereby achieving the height adjustment of the gravity center of the wind turbine installation vessel in such a way that the position of the gravity center can meet installation requirements of the wind turbine, so that the stability of the installation vessel can be improved. When the adjustment of a horizontal position of the gravity center of the installation vessel is performed, the counterweight's position relative to the vessel body is varied by the sliding movement of the sliding blocks in the sliding channel, thereby realizing the corresponding adjustment of the horizontal position of the gravity center of the installation vessel with the variation of the position of wind turbine. The arrangement of the mounting rack, the counterweight, the height adjuster as well as the sliding blocks and the sliding channel not only simplifies the process of adjusting the gravity center of the wind turbine installation vessel in the height direction and the horizontal direction, but also brings about a relatively higher adjustment speed as compared to the situation of injecting water into the ballast bank of the vessel body, whereby the requirement on the stability of the installation vessel when moving the wind turbine at a relative fast speed can be met and the operation efficiency of the installation vessel is improved.

In another preferred embodiment, the horizontal installation plate of the gravity center adjustment device according to the present invention includes an upper horizontal installation plate and a lower horizontal installation plate that are arranged substantially in parallel with each other and connected with each other by an upright plate which is substantially perpendicular thereto. The lower surface of the upper horizontal installation plate and the upper surface of the lower horizontal installation plate are provided with sliding blocks, respectively. The arrangement of the upper horizontal installation plate and the lower horizontal installation plate makes the connection between the mounting rack and the vessel body more secure, and meanwhile makes the weight of the counterweight to be endured by the sliding blocks and the sliding channel on two sides, thus improving the reliability of the support of the counterweight by the mounting rack and increasing the endurable weight of the counterweight, so that the adjustment range and adjustment speed of the gravity center adjustment device is improved and the applicable range of the gravity center adjustment device is expanded.

### BRIEF DESCRIPTION OF THE DRAWINGS

Fig. 1 is a schematic perspective view of a first embodiment of a wind turbine installation vessel according to the present invention;

Fig.2 is a schematic top view of the first embodiment of the wind turbine installation vessel according to the present invention;

Fig.3 is a schematic side view of the first embodiment of the wind turbine installation vessel according to the present invention;

Fig. 4 is a schematic perspective view of a first embodiment of a gravity center adjustment device according to the present invention;

Fig. 5 is a schematic perspective view of a second embodiment of a gravity center adjustment device according to the present invention;

Fig. 6 is a schematic enlargement view of the portion A shown in Fig. 5;

Fig. 7 is a schematic side view of a second embodiment of a wind turbine installation vessel according to the present invention;

Fig. 8 is a schematic front view of the second embodiment of the wind turbine installation vessel according to the present invention.

### DETAILED DESCRIPTION OF THE INVENTION

The kernel of the present invention is to provide a gravity center adjustment device, which is able to improve the speed of adjusting the gravity center of a wind turbine installation vessel in the vertical and horizontal directions to thereby improve the operation efficiency of installing the wind turbine. Another kernel of the present invention is to provide a wind turbine installation vessel including the gravity center adjustment device.

In order that those skilled in the art can understand the technical solution of the present invention better, the present invention will be explained in further detail hereinafter with reference to the accompanying drawings and embodiments.

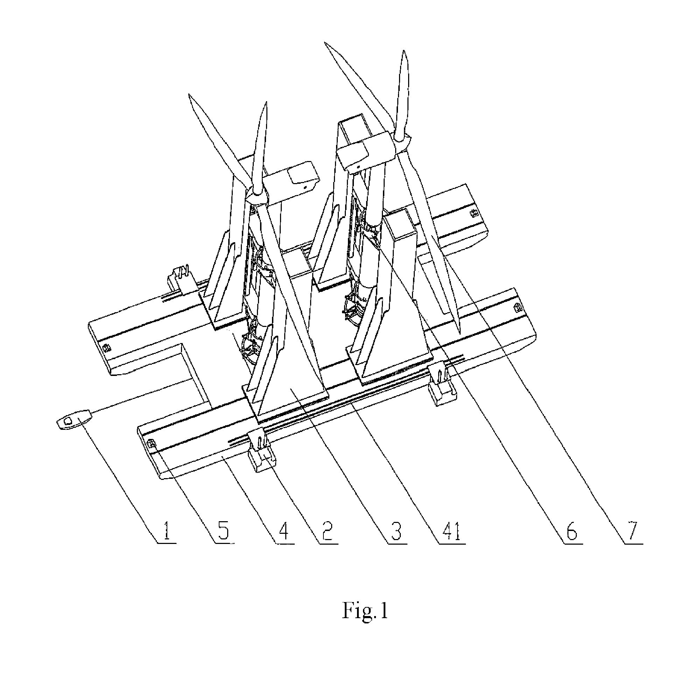

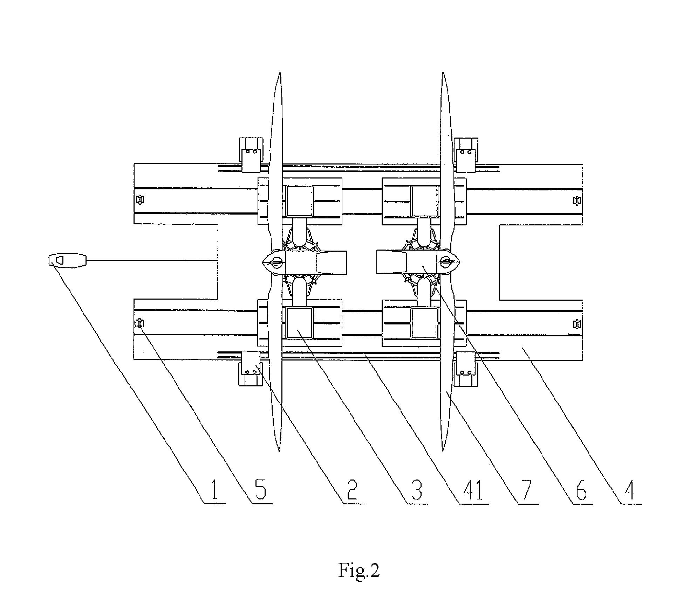

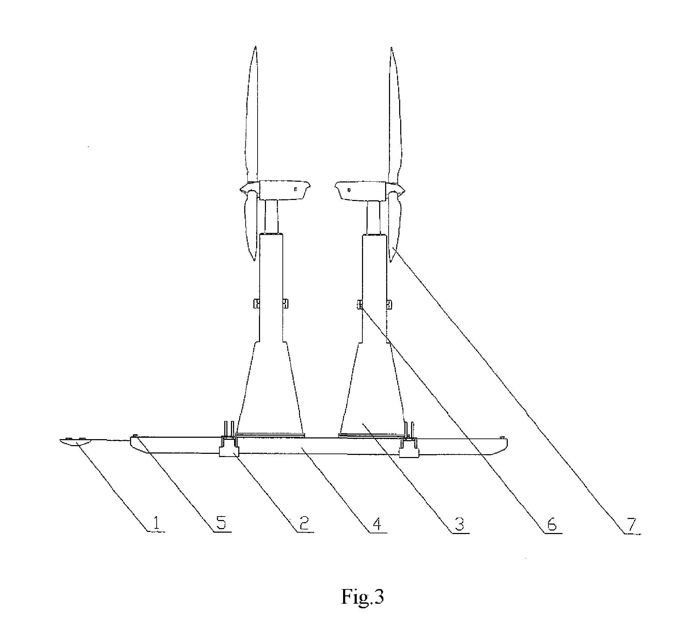

Reference is firstly made to Figures 1-3, wherein Figure 1 is a schematic perspective view of a first embodiment of a wind turbine installation vessel according to the present invention, Figure 2 is a schematic top view of the first embodiment of the wind turbine installation vessel according to the present invention, and Figure 3 is a schematic side view of the first embodiment of the wind turbine installation vessel according to the present invention.

As shown in the Figures, in one embodiment, a gravity center adjustment device 2 according to the present invention is movably mounted to an outside of a vessel body 4 of the wind turbine installation vessel, so that the gravity center adjustment device 2 selectively moves in a plane substantially parallel with the vessel body 4. The outside as discussed herein means that the gravity center adjustment device 2 is located at the periphery of the vessel body 4, including around and below the vessel body 4, rather than being located inside or above the vessel body 4. The plane of the vessel body 4 as discussed herein indicates a plane of the vessel body that is substantially parallel with the horizontal plane.

The Figures show a particular wind turbine installation vessel equipped with the gravity center adjustment device 2 according to the present invention. The turbine installation vessel includes a vessel body 4, an upright column 3 mounted on the vessel body 4, an enclasping mechanism 6 mounted to the upright column 3, an anchoring mechanism 5 mounted at the four corners of the vessel body 4 for fixing the vessel body 4, and the gravity center adjustment device 2 that is fixedly mounted to the vessel body 4, with the gravity center adjustment device 2 located at the outside of the vessel body 4. The vessel body 4 is provided thereon with movement rails for the upright columns 3 perpendicular to each other, so that the upright columns 3 can move along the rails under the effect of its motorization member, thereby realizing the transverse movement of the wind turbine 7 on the vessel body 4. U-shaped openings are formed in front and rear ends of the vessel body 4 so that the wind turbine 7 can be mounted onto a wind turbine base through these openings. Of course, the wind turbine installation vessel may also have other particular structures. What is described herein is only one exemplified embodiment and cannot be used as any limitation on the structures other than the gravity center adjustment device 2.

During operation, the wind turbine is assembled at the dock, and then the assembled wind turbine is installed on the vessel body 4 of the wind turbine installation vessel by means of a hoisting device, such as a crane and enclasped by the enclasping mechanism 6. Since such wind turbine installation vessel does not have any traction device, a traction vessel 1 is required in order to move the wind turbine installation vessel to an offshore wind power plant. After arriving at the offshore wind power plant, the traction vessel 1 draws the wind turbine installation vessel to a position of the base of the wind turbine 7 corresponding to the U-shaped openings. Then, the anchoring mechanism 5 drops an anchor to roughly fix the wind turbine installation vessel. Meanwhile, the upright column 3, the enclasping mechanism 6 mounted on the upright column 3 and the wind turbine 7 enclasped by the enclasping mechanism 6 are moved to the U-shaped openings under the effect of the motorization device, and then hoisted above the base by the hoisting mechanism provided inside the upright column 3. Next, the wind turbine 7 and the base are fixedly connected under the cooperative effect of the motorization device and the hoisting mechanism. Thereafter, the enclasping mechanism 6 and the upright column 3 are moved away and finally, the installation platform for the wind turbine is moved away. During the installation of the wind turbine 7, in order to ensure that the installation process goes smoothly, the gravity center adjustment device 2 according to the present invention adjusts the position of gravity center (including the position in the vertical direction and the position in the horizontal direction) of the installation vessel timely, thereby providing a better working environment for the installation of the wind turbine 7.

It can be seen that, on one hand, since the existence of the gravity center adjustment device according to the present invention is independent of the vessel body 4, its size is no longer limited by the size of the wind turbine installation vessel and the size of the ballast bank provided in the vessel body of the wind turbine installation vessel and may be set as desired so that the adjustment ability of the gravity center adjustment device 2 can be changed; on the other hand, since the gravity center adjustment device 2 is movably installed to the vessel body 4 and can move in a plane substantially parallel with the vessel body 4, the gravity center adjustment device 2 is fixed when reaching a predetermined position to thereby adjust the horizontal position of the gravity center of the installation vessel, whereby its ability of adjusting the gravity center of the wind turbine installation vessel can be improved and the stability of the wind turbine installation vessel can be improved. Therefore, the wind turbine installation vessel can operate in an environment of poor weather condition, so that the operation efficiency can be improved and the cost of constructing a wind power plant on the offshore can be reduced.

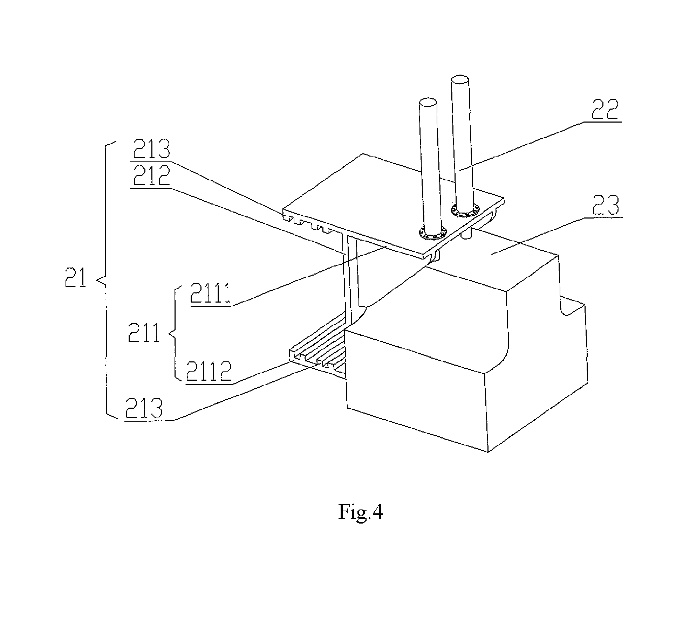

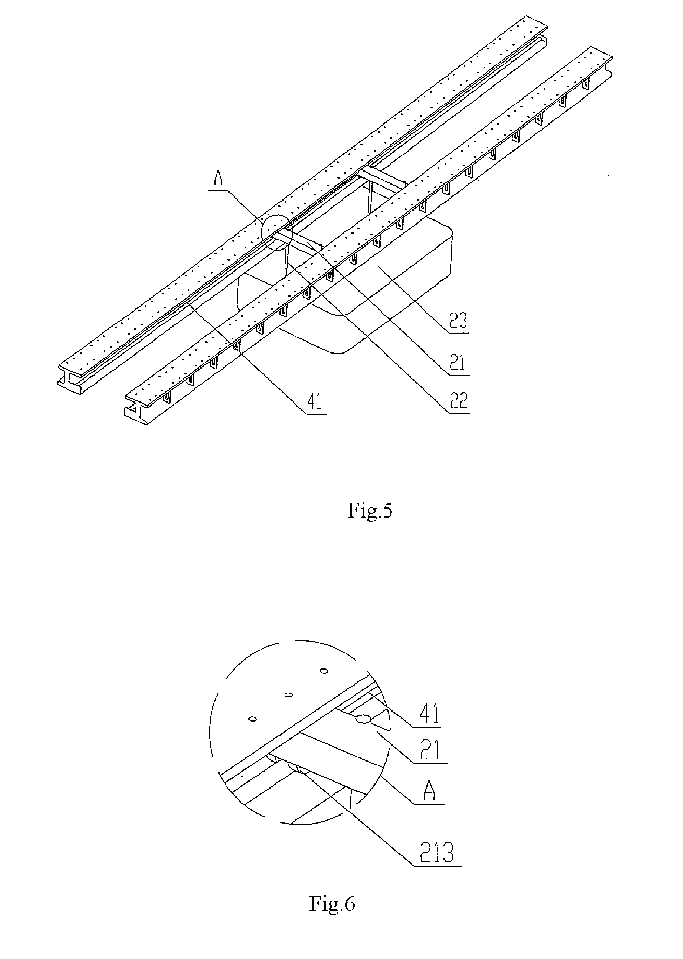

Reference is now made to Figures 4-6, wherein Figure 4 is a schematic perspective view of a first embodiment of a gravity center adjustment device for the wind turbine installation vessel according to the present invention, Figure 5 is a schematic perspective view of a second embodiment of a wind turbine installation vessel according to the present invention first embodiment of the wind turbine installation vessel according to the present invention, and Figure 6 is a schematic enlargement view of the portion A shown in Figure 5.

As shown in Figure 4, in one embodiment, a gravity center adjustment device 2 according to the present invention may include an mounting rack 21, a counterweight 23 and a height adjuster 22 for adjusting a relative height between the counterweight 23 and the vessel body 4, with the mounting rack 21 mounted to the vessel body 4. One of the mounting rack 21 and the vessel body 4 is provided with sliding blocks 213, and the other is provided with a sliding channel 41 that cooperates with the sliding blocks 213. The counterweight 23 is mounted to the mounting rack 21 by the height adjuster 22. Of course, the variation of the horizontal positions of the mounting rack 21, the counterweight 23 and the height adjuster 22 relative to the vessel body 4 can be realized by other ways, and there is no limitation on this respect.

The counterweight 23 may have a stepped structure so as to be easily mounted to the mounting rack 21 by the height adjuster 22. The counterweight 23 may be machined into other shapes as desired. In general, the material of the counterweight may be steel, or other materials with a larger density than water. Of course, the specific shape and the used material are not limited to what have been described herein. Any shape and material that can meet the functional requirements may be selected.

When the adjustment of position of the gravity center of the wind turbine installation vessel is performed, the relative height between the counterweight 23 and the vessel body 4 is adjusted by the height adjuster 22 to change the height of the counterweight 23, thereby achieving the height adjustment of the gravity center of the wind turbine installation vessel. Meanwhile, by sliding the sliding blocks 213 relative to the sliding channel 41 so that the mounting rack 21 fixedly connected with the sliding blocks 213, together with the height adjuster 22 and the counterweight 23, slides in the plane substantially parallel with the vessel body 4, thereby realizing the horizontal adjustment of the gravity center of the installation vessel, whereby the stability of installation vessel is improved and normal installing of the wind turbine is ensured.

In this way, the arrangement of the mounting rack 21, the counterweight 23, the height adjuster 22 as well as the sliding blocks 213 and the sliding channel 41 not only simplifies the process of adjusting the gravity center of the wind turbine installation vessel in the height direction and the horizontal direction, but also brings about a relatively higher adjustment speed as compared to the situation of injecting water into the ballast bank of the vessel body, whereby the requirement on the stability of the installation vessel when moving the wind turbine at a relative fast speed can be met and the operation efficiency of the installation vessel is improved.

Specifically, the mounting rack 21 of the gravity center adjustment device 2 according to the present invention may include a horizontal installation plate 211. The sliding blocks 213 may be fixed to the horizontal installation plate 211. The counterweight 23 may be mounted to the horizontal installation plate 211 by the height adjuster 22. Of course, in another particular embodiment, the horizontal installation plate 211 of the mounting rack according to the invention may have a structure as shown in Figures 5 and 6.

The fact that the sliding blocks 213 are fixed to the horizontal installation plate 211 makes the connection between the mounting rack 21 and the vessel body 4 very convenient, and makes it easy to effect the variation of the horizontal position of the gravity center adjustment device 2, thereby changing the horizontal position of the gravity center of the installation vessel; meanwhile, the fact that the counterweight 23 is mounted to the horizontal installation plate 211 by the height adjuster 22 makes the height adjuster 22 adjust the vertical position of the counterweight 23 more conveniently, so that the variation of the position of the counterweight 23 in the vertical direction is more apparent, thus further improving the efficiency of adjusting the gravity center in the vertical direction.

Of course, the horizontal installation plate 211 may also include an upper horizontal installation plate 2111 and a lower horizontal installation plate 2112 that are arranged substantially in parallel with each other and connected with each other by an upright plate 212 which is substantially perpendicular thereto. The lower surface of the upper horizontal installation plate 2111 and the upper surface of the lower horizontal installation plate 2112 are provided with sliding blocks 213, respectively.

The arrangement of the upper horizontal installation plate 2111 and the lower horizontal installation plate 2112 makes the connection between the mounting rack 21 and the vessel body 4 more secure, and meanwhile makes the weight of the counterweight 23 endured by sliding blocks 213 and the sliding channel 41 on two sides, thus improving the reliability of the support of the counterweight 23 by the mounting rack 21 and the endurable weight of the counterweight 23, so that the adjustment range and adjustment speed of the gravity center adjustment device 2 is improved and the applicable range of the gravity center adjustment device 2 is expanded.

In one embodiment, the height adjuster 22 of the gravity center adjustment device according to the present invention may be a screw stem, and at least one of the horizontal installation plate 211 and the counterweight 23 is formed with a screw hole that corresponds to the screw stem. In this way, the height position of the counterweight 23 can be changed by rotating the screw stem in the screw hole, whereby realizing the adjustment of the height position of the gravity center of the wind turbine installation vessel. The screw stem is simple in structure and low in cost, which reduces the cost of the gravity center adjustment device.

Specifically, the counterweight 23 may be formed with a screw hole. A first end of the screw stem passes through the screw hole or connects with the screw hole, and is spaced from an upper surface of counterweight 23 at a certain distance, while a second end of the screw stem is fixedly connected to the horizontal installation plate 211. In this way, during the adjustment of the height position of the counterweight 23, the counterweight 23 can move along the screw stem in the vertical direction through rotating the counterweight 23. This is a quite simple adjustment process. Meanwhile, whether the first end of the screw stem passes through the screw hole or connects with the screw hole is specifically determined according to the length of the screw stem and the thickness of the counterweight 23 in the vertical direction. If the screw stem is relatively long and the thickness of the counterweight 23 in the vertical direction is relatively thin, the first end of the screw stem passes through the screw hole of the counterweight 23; otherwise, the first end connects with the screw hole.

Of course, the first end of the screw stem may be fixed to the counterweight 23 while the second end passes through or connects with the screw hole formed in the horizontal installation plate 211. It is also possible that both ends of the screw stem are threadedly connected with the counterweight 23 and the horizontal installation plate 211 respectively, as long as the functional requirements can be met.

In another embodiment, the height adjuster 22 according to the present invention may be an oil cylinder. A piston barrel of the oil cylinder is fixed to the horizontal installation plate, and an end of a piston rod of the oil cylinder is fixedly connected with the counterweight 23. With the protrusion and retraction of the piston rod of the oil cylinder, the height of the counterweight 23 can be changed so that the position of the gravity center of the wind turbine installation vessel can be adjusted. The oil cylinder is mature in structure, easy to operate and highly reliable, making it easy to realize the adjustment of the position of the gravity center of the wind turbine installation vessel.

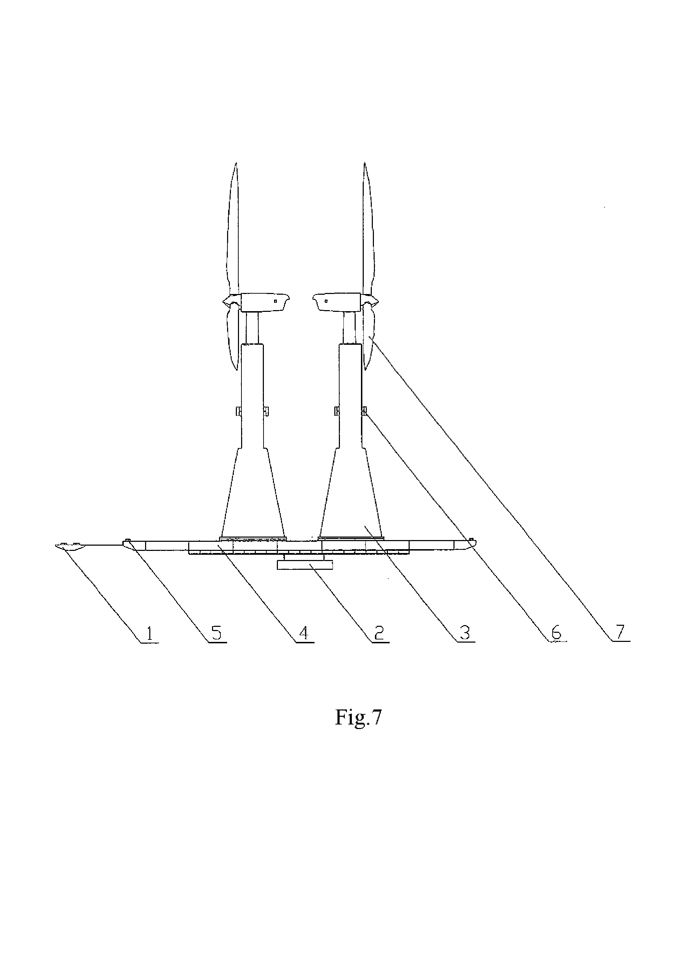

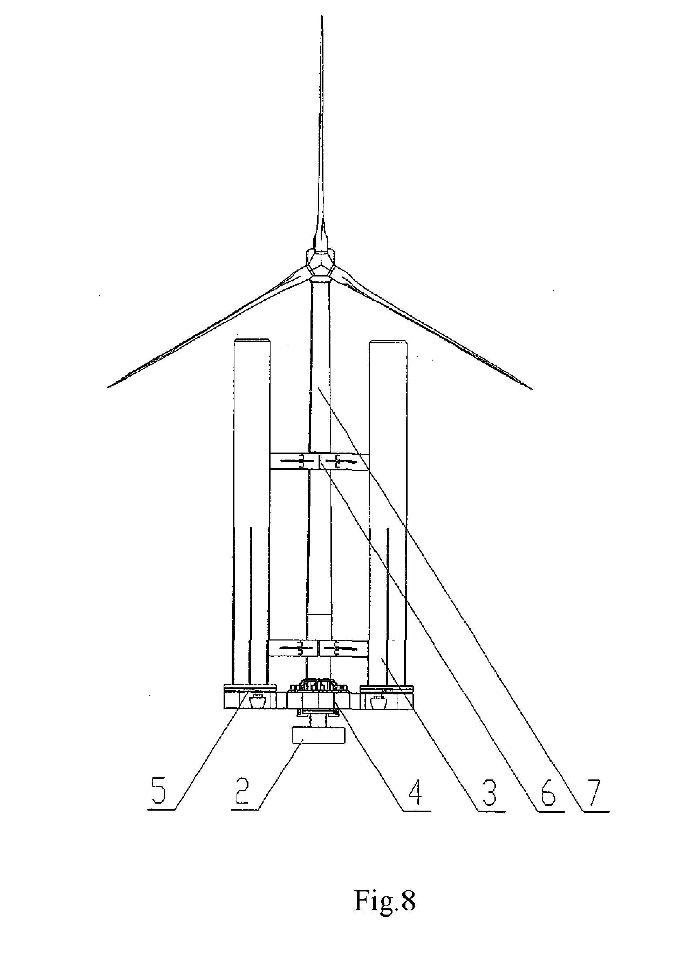

Reference is now made to Figures7 and 8, wherein Figure 7 is a schematic side view of a second embodiment of a wind turbine installation vessel according to the present invention, and Figure 8 is a schematic front view of the second embodiment of the wind turbine installation vessel according to the present invention.

As shown in Figures 7 and 8, for facilitating installation of the gravity center adjustment device 2, the gravity center adjustment device 2 may be installed below the vessel body 4, depending on the structure of the wind turbine installation vessel. Of course, as shown in Figures 1-3, the gravity center adjustment device 2 may be installed on left and right sides of the vessel body 4. Meanwhile, a plurality of gravity center adjustment devices 2 may be arranged evenly around the vessel body 4. In this way, the plurality of gravity center adjustment devices 2 may also be made having different heights so as to adjust, in a certain extent, the position of the gravity center of the wind turbine installation vessel in the horizontal direction.

In order to match with the vessel body 4 with the above structure, the movement of wind turbine in the direction perpendicular to the moving direction of the installation vessel is relatively small and the variation of the position of gravity center thereof is relatively small. The sliding channel 41 may be arranged only along the back and forth direction of the installation vessel. The adjustment of the position of the gravity center in the horizontal direction that is perpendicular the above back and forth direction may be changed by providing differently located counterweights 23 with different vertical heights. The back and forth direction as discussed herein indicates the moving direction of the installation vessel.

In addition to the above discussed gravity center adjustment device, the present invention also provides a wind turbine installation vessel including the above-mentioned gravity center adjustment device. With respect to the structure of other parts of the wind turbine installation vessel, it may refer to the prior art. The description of these parts is omitted herein.

The wind turbine installation vessel and the height adjustment device thereof according to the present invention have been described in detail hereinbefore. Some exemplified examples are used to explain the principle and embodiments of the present invention herein, and the explanation of these examples only serves to help understand the method and kernel ideas of the present invention. It is noted that the present invention can be varied and modified by those with ordinary skills in the art, under the premise of being not departed from the principle of the invention. Those variation and modifications also fall within the scope of protection defined by the appended claims.

## Claims

1. A gravity center adjustment device for a wind turbine installation vessel, **characterized in that**, the gravity center adjustment device (2) is movably mounted to an outside of a vessel body (4) of the wind turbine installation vessel, so that the gravity center adjustment device (2) can selectively move in a plane substantially parallel with the vessel body (4).

2. The gravity center adjustment device according to claim 1, **characterized by** comprising a mounting rack (21), a counterweight (23) and a height adjuster (22) for adjusting a relative height between the counterweight (23) and the vessel body (4), with the mounting rack (21) mounted to the vessel body (4), one of the mounting rack (21) and the vessel body (4) is provided with sliding blocks (213), and the other is provided with a sliding channel (41) that cooperates with the sliding blocks (213), the counterweight (23) being mounted to the mounting rack (21) by the height adjuster (22).

3. The gravity center adjustment device according to claim 2, **characterized in that**, the mounting rack (21) includes a horizontal installation plate (211) on which sliding blocks (213) are arranged, and the counterweight (23) is mounted to the horizontal installation plate (211) by the height adjuster (22).

4. The gravity center adjustment device according to claim 3, **characterized in that**, the horizontal installation plate (211) includes an upper horizontal installation plate (2111) and a lower horizontal installation plate (2112) that are arranged substantially in parallel with each other and connected with each other by an upright plate (212) which is substantially perpendicular thereto, and the lower surface of the upper horizontal installation plate (2111) and the upper surface of the lower horizontal installation plate (2112) are provided with said sliding blocks (213), respectively.

5. The gravity center adjustment device according to any one of claims 2 to 4, **characterized in that**, the height adjuster (22) is a screw stem, and at least one of the horizontal installation plate (21) and the counterweight (23) is provided with a screw hole that corresponds to the screw stem.

6. The gravity center adjustment device according to any one of claims 2 to 4, **characterized in that**, the height adjuster (22) is an oil cylinder, a piston barrel of the oil cylinder is fixed to the mounting rack (21), and an end of a piston rod of the oil cylinder is fixedly connected with the counterweight (23).

7. The gravity center adjustment device according to any one of claims 1 to 4, **characterized in that**, a plurality of the gravity center adjustment devices (2) are evenly arranged on left and right sides of the vessel body (4).

8. The gravity center adjustment device according to any one of claims 1 to 4, **characterized in that**, the gravity center adjustment device (2) is mounted below the vessel body (4).

9. The gravity center adjustment device according to any one of claims 2 to 4, **characterized in that**, the sliding channel (41) extends in the back and forth direction of the vessel body (4).

10. A wind turbine installation vessel, **characterized by** comprising a gravity center adjustment device (2) according to any one of claims 1 to 9.
